# EUROPEAN PATENT SPECIFICATION

(11) **EP 4 014 800 B1**
(45) Date of publication and mention of the grant of the patent: **25.09.2024**
(21) Application number: 21211520.8
(22) Date of filing: 30.11.2021
(51) Int. Cl.: A47J 31/06, A47J 31/00

(54) **BREWING MACHINE**
BRAUMASCHINE
MACHINE D'INFUSION

(30) Priority: 30.11.2020 US 202063118970 P; 26.11.2021 CN 202111421967
(43) Date of publication of application: 22.06.2022
(73) Proprietor: Dachun Technology Co., Ltd., Kaohsiung City 825008 (TW)
(72) Inventor: WU, Gwo-Huei, 825611 Kaohsiung City (TW); WU, En-Hsin, 825611 Kaohsiung City (TW); CHANG, Meng-En, 825611 Kaohsiung City (TW); HUNG, Yu-Ching, 825611 Kaohsiung City (TW)
(74) Representative: Lang, Christian

(56) References cited:
- EP-A1- 3 649 903
- WO-A1-2015/124592
- WO-A1-2017/051968
- WO-A2-2012/092292
- KR-A- 20150 101 084
- US-A1- 2006 096 465
- US-A1- 2015 075 387
- US-A1- 2018 168 390
- US-A1- 2018 255 962

## Description

### BACKGROUND

### Field of the Invention

The invention relates to a brewing machine, and, more particularly, to a brewing machine using pour-over techniques to brew beverages.

### Description of the Related Art

There are many factors that may affect the flavor of a cup of coffee, such as the dispensation rate, flow path, water temperature, grind size of coffee beans, brewing time and other brewing parameters. Besides, different types of coffee beans are suitable for their respective brewing parameters.

Generally, it is not easy for most people to drink a cup of high-quality pour-over coffee because of the following reasons. First, most people don't understand how different brewing parameters/factors affect the flavor of a cup of coffee. Second, pour-over coffee brewing is always done by hand and thus fails to accurately control brewing parameters in a brewing process. Hence, different people may brew coffee cups with inconsistent flavors. Third, because pour-over coffee brewing is always done by hand, it is time-consuming and inconvenient.

Therefore, it is desirable to provide a brewing machine to automate the brewing process according to various brewing parameters, thus allowing anyone to easily drink a cup of high-quality pour-over coffee or other beverages. Patent application publication KR 20150101084 A discloses a drip coffee making apparatus for manufacturing a drip coffee having improved flavor by controlling a supply route and a supply time of water during drip coffee production. Patent application publications WO 2012/092292 A2, EP 3649903 A1 and US 2015/075387 A1 disclose further drip coffee brewing apparatus.

### BRIEF SUMMARY OF THE INVENTION

The above-mentioned object is achieved by a brewing machine according to claim 1. Preferred embodiments are subject matter of the dependent claims. The brewing machine includes a liquid source for supplying a liquid, a dispensing outlet in fluid communication with the liquid source to dispense the liquid, and a motion device for moving the dispensing outlet according to at least one brewing pattern. The motion device includes a first drive shaft and a second drive shaft, wherein the first drive shaft rotates the second drive shaft, the second drive shaft rotates the dispensing outlet, and an extending line of the second drive shaft is apart from and extends in a different direction than an extending line of the first drive shaft.

The brewing machine may include a heating device in fluid communication with the liquid source and capable of heating the liquid, wherein the dispensing outlet is in fluid communication with the heating device. A return path may be provided in a fluid path between the heating device and the dispensing outlet to allow the liquid flowing to the dispensing outlet to return to the heating device.

The brewing machine may include a control unit for controlling a brewing process according to a programmable brewing sequence. The programmable brewing sequence may divide a total brewing time into multiple stages, each of the stages may correspond to at least two different brewing parameters, and two successive stages may have at least one different brewing parameter for brewing.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 shows a schematic front view of a brewing machine as disclosed herein.
FIG. 2 shows a side view of the brewing machine shown in FIG. 1.
FIG. 3A shows a schematic diagram of a motion device.
FIG. 3B shows a schematic diagram of another exemplary motion device.
FIG. 4 shows a schematic diagram illustrating a planar patrol area of a dispensing outlet.
FIG. 5 shows a schematic diagram of a motion device according to the invention.
FIG. 6 shows a schematic diagram illustrating another illustrative example of a planar patrol area of a dispensing outlet.
FIG. 7 shows a schematic diagram of another illustrative example of a motion device.
FIG. 8 shows a schematic diagram of a drip coffee pouch.
FIG. 9 shows a schematic diagram of a pouch tray.
FIG. 10 shows a schematic diagram illustrating the use of a drip coffee pouch in cooperation with a pouch tray.
FIG. 11 shows a block diagram of a computer system according to an embodiment of the invention.
FIG. 12 shows a schematic diagram of an operation interface.
FIG. 13 shows a schematic diagram of brewing patterns.
FIG. 14A shows a schematic diagram of a brewing machine according to an illustrative example, and FIG. 14B shows a block diagram of FIG. 14A.
FIG. 15 shows a schematic diagram of a brewing machine according to another illustrative example.
FIGS. 16A and 16B show schematic diagrams illustrating a return path according to various illustrative examples.
FIG. 17 shows a schematic diagram of a brewing system according to an illustrative example.
FIG. 18 shows a schematic diagram of programmable brewing sequences described herein.
FIGS. 19A and 19B show schematic diagrams of a brewing machine according to another illustrative example.
FIG. 20 shows a schematic diagram of a brewing machine according to another illustrative example.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

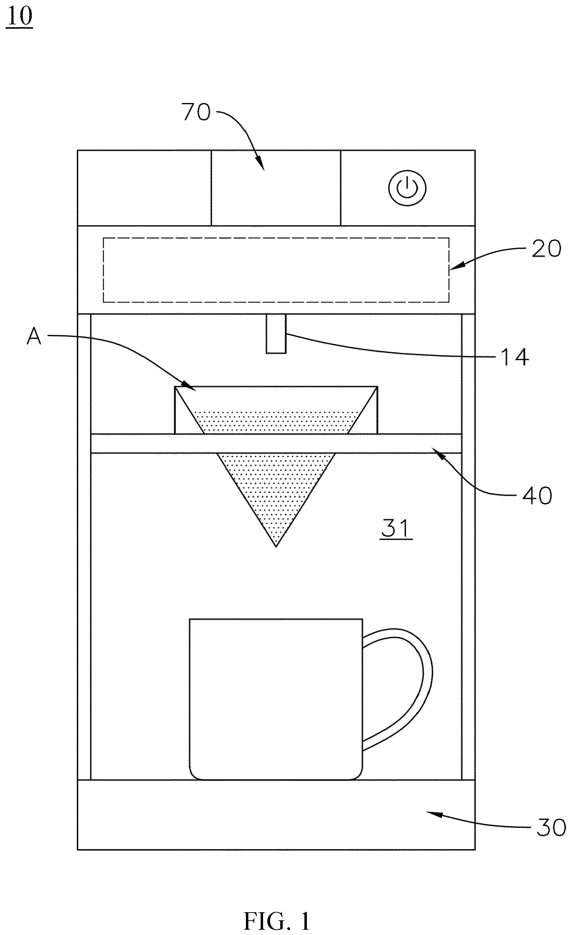

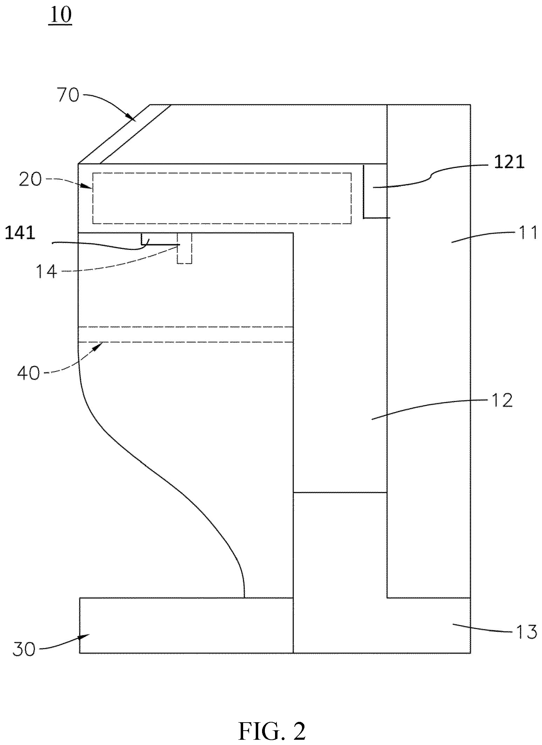

Referring to both FIG. 1 and FIG. 2 a brewing machine 10 of the present disclosure includes a liquid source 11, a heating device 12, a pump 13, a dispensing outlet 14, a motion device 20, a mount 30, a pouch tray 40, and an operation interface 70. As shown in FIG. 2, the liquid source 11 may supply a liquid for brewing and may include, for example, water, milk, soy milk and wine. For example, the liquid source 11 may be a reservoir or a filtered water pipeline. The heating device 12 is used to heat the liquid to a prescribed temperature, and the heating device 12 may have a level detector 121 to main a proper fluid level inside the heating device 12. The liquid source 11, the heating device 12, the pump 13 and the dispensing outlet 14 are in fluid communication with one another. The pump 13 is used to pump the liquid to a dispensing outlet 14, and the dispensing outlet 14 dispenses the liquid to a container (such as a drip coffee pouch A). In this illustrative example, the dispensing outlet 14 is disposed on the motion device 20, but the invention is not limited thereto. The dispensing outlet 14, such as a nozzle or a spout, is not limited to a specific structure, as long as the function of dispensing liquid is provided. Further, in one embodiment, the brewing machine 10 may have a flow measurement device 141 such as a flow meter to measuring the quantity or rate of liquid passing through the dispensing outlet 14, and the mount 30 may include a weight sensor to measure weights of dispensed liquid and various objects on the mount 30.

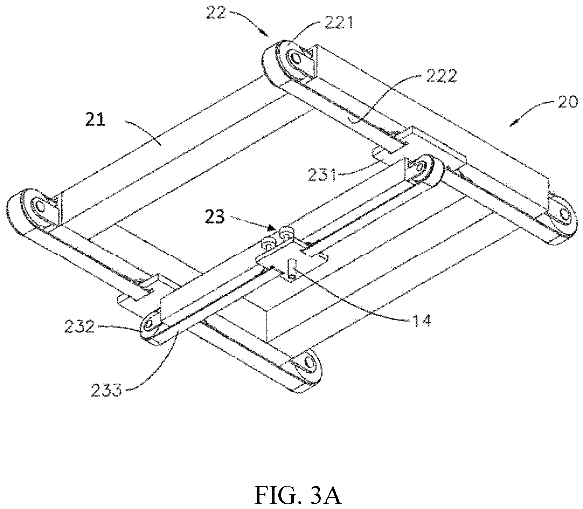

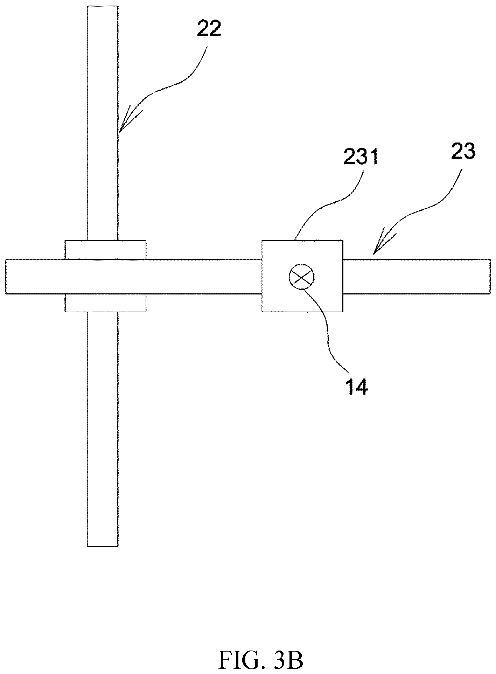

The motion device 20 is capable of moving the dispensing outlet 14. For example, the motion device 20 is instructed to move the dispensing outlet 14 according to at least one brewing pattern. As shown in FIG. 3A, the motion device 20 may include a frame 21, two longitudinal transmission assemblies 22 and a lateral transmission assembly 23. Each longitudinal transmission assembly 22 is disposed on the frame 21 and includes two drive wheels 221 and a longitudinal pulley 222, and the drive wheels 221 are rotatably mounted on the frame 21. The longitudinal pulley 222 is coupled to two drive wheels 221 and driven by the drive wheels 221. The longitudinal transmission assemblies 22 move the lateral transmission assembly 23 in a longitudinal direction. The lateral transmission assembly 23 is disposed on the longitudinal transmission assemblies 22 and includes a movable seat 231, two drive wheels 232 and a lateral pulley 233. The movable seat 231 is disposed on the longitudinal pulley 222 and moves along with the longitudinal pulley 222, and the drive wheels 232 are rotatably mounted on the movable seat 231. The lateral pulley 233 is coupled to the drive wheels 232 and driven by the two wheels 232. The dispensing outlet 14 is disposed on the lateral pulley 233 and moves along with the lateral pulley 233, and the lateral transmission assembly 23 moves the dispensing outlet 14 in a lateral direction. In another illustrative example, as shown in FIG. 3B, the motion device 20 may be simplified to have only one longitudinal transmission assembly 22, and the lateral transmission assembly 23 is directly disposed on the longitudinal transmission assembly 22 to thus omit the frame 21 shown in FIG. 3A. Moreover, the pulley may be replaced by a threaded rod without limitation.

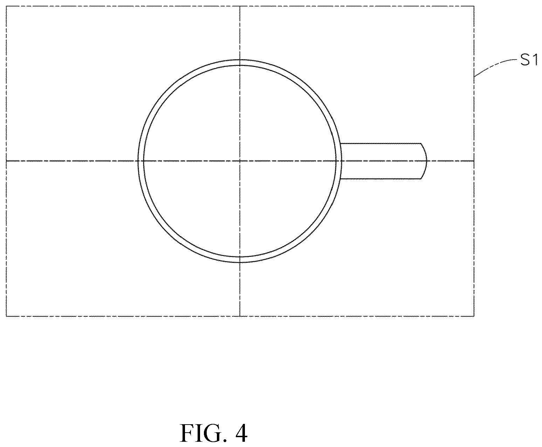

The motion device 20 in the form of an X-Y Table may have a first transmission mechanism (longitudinal transmission assembly 22) and a second transmission mechanism (lateral transmission assembly 23). The first transmission mechanism (longitudinal transmission assembly 22) may move the second transmission mechanism (lateral transmission assembly 23) to allow the second transmission mechanism (lateral transmission assembly 23) to move linearly and thus have a line-shaped motion trajectory, and the second transmission mechanism (lateral transmission assembly 23) may linearly move the dispensing outlet 14 to allow the dispensing outlet 14 to similarly have a line-shaped motion trajectory. Therefore, the motion device 20 may move the dispensing outlet 14 to any position of the plane S1 shown in FIG. 4 to simulate the dispensation mode and pouring path in brewing pour-over coffee or other beverages. In this illustrative example, the area of the plane S1 (area that the dispensing outlet 14 may scan) is allowed to sufficiently cover a drip coffee pouch or a filter paper/filter paper cup containing coffee beans. The longitudinal transmission assembly 22 is preferably perpendicular to the lateral transmission assembly 23. Specifically, a non-parallel arrangement for the longitudinal transmission assembly 22 and the lateral transmission assembly 23 is sufficient to arbitrarily move the dispensing outlet 14 along to different axes.

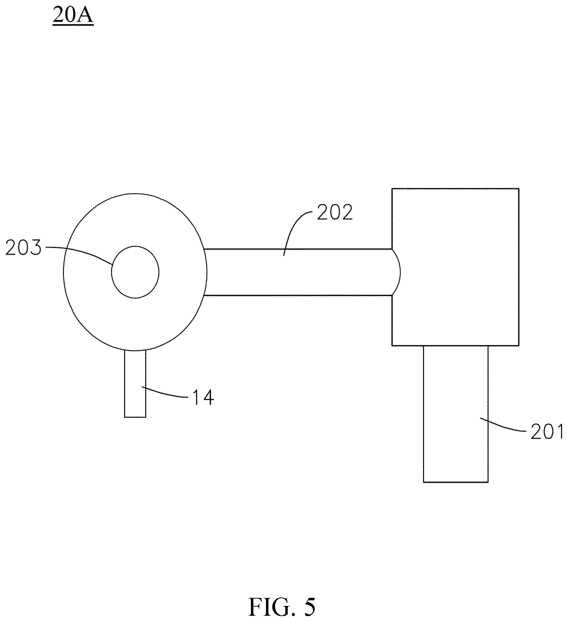

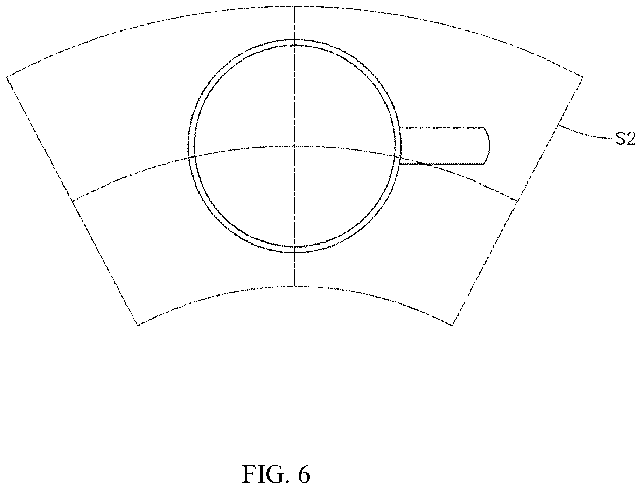

As shown in FIG. 5, in one embodiment of the invention, the motion device 20A may include a first drive shaft 201 and a second drive shaft 203. A connection piece 202 is disposed on the first drive shaft 201 and driven by the rotating first drive shaft 201 to rotate. The second drive shaft 203 is disposed on the connection piece 202 and driven by the connection piece 202 to rotate along with the first drive shaft 201. The second drive shaft 203 is preferably perpendicular to the first drive shaft 201, but the invention is not limited thereto. An extending line of the second drive shaft 203 is apart from and extends in a different direction than an extending line of the first drive shaft 201; that is, these two extending lines do not cross each other. Moreover, the first drive shaft 201, the connection piece 202 and the second drive shaft 203 are movable and may move to any desired position during a brewing process. The dispensing outlet 14 is disposed on the second drive shaft 203 and driven by the rotating second drive shaft 203 to rotate along with the second drive shaft 203. The motion device 20 may be in the form of a two-axis robot having a first transmission mechanism (first drive shaft 201) and a second transmission mechanism (second drive shaft 203). The first transmission mechanism (first drive shaft 201) may rotate the second transmission mechanism (second drive shaft 203) to allow the second transmission mechanism (second drive shaft 203) to have an arc-shaped motion trajectory, and the second transmission mechanism (second drive shaft 203) may rotate the dispensing outlet 14 to allow the dispensing outlet 14 to similarly have an arc-shaped motion trajectory. Therefore, the motion device 20 may arbitrarily move the dispensing outlet 14 on a partial spherical surface that may be projected on a plane to form a sector plane S2 shown in FIG. 6. Similarly, the area of the sector plane S2 (area that the dispensing outlet 14 may scan) is able to sufficiently cover a drip coffee pouch or a filter paper/filter paper cup containing coffee beans. In another illustrative example , the motion device 20 may be formed as a three-axis drive device or a device with more than three driving axes to cause movements with respect to more dimensions.

The first transmission mechanism may move the second transmission mechanism produce a first motion trajectory of the second transmission mechanism, the second transmission mechanism may move the dispensing outlet to produce a second motion trajectory of the dispensing outlet, and the first motion trajectory and the second motion trajectory are both line-shaped or both arc-shaped. Moreover, the first transmission mechanism and the second transmission mechanism of the motion device may be both a linear transmission mechanism or both a rotational transmission mechanism. Therefore, each transmission mechanism can be made by similar transmission mechanical pieces to simplify the structure and reduce fabrication costs of a motion device. Further, each transmission mechanism can be driven by, for example, a stepping motor or a servo motor.

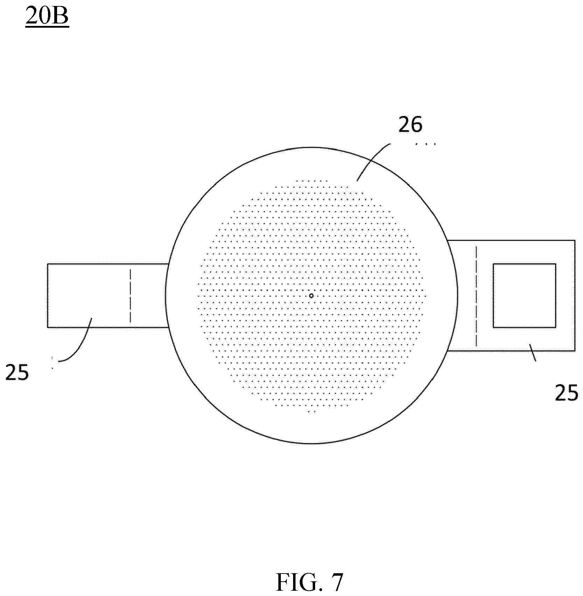

In an alternate illustrative example, as shown in FIG.7, the motion device 20B may be a spherical motor that includes a stator 25 and a rotor 26. The stator 25 is fixed, and the rotor 26 is disposed in the stator 25 and can rotate relative to the stator 25 along three imaginary shafts that are perpendicular to one another. When the dispensing outlet 14 is disposed on the rotor 26 of the spherical motor, the dispensing outlet 14 may rotate along with the rotor 26 to thus move on a spherical surface, thereby achieving the effect of moving the dispensing outlet 14 to desired positions.

In the following illustrative examples, the brewing machine 10 uses water to brew coffee as an example, but the invention is not limited thereto. For example, the brewing machine 10 may use other liquid such as milk to brew a beverage, and the brewing machine 10 can brew other drink such as tea without limitation.

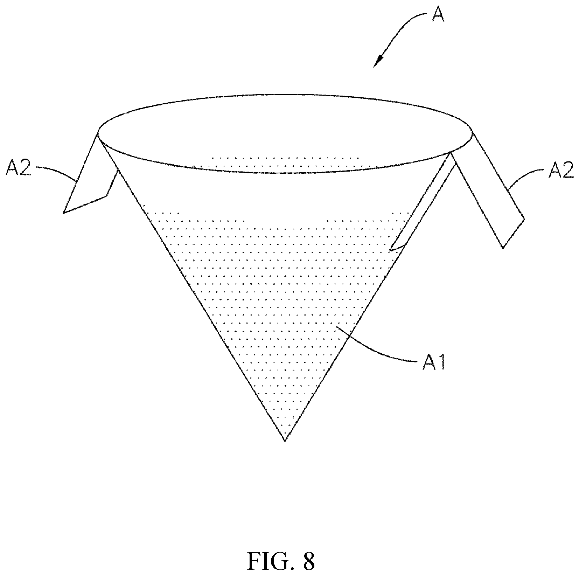

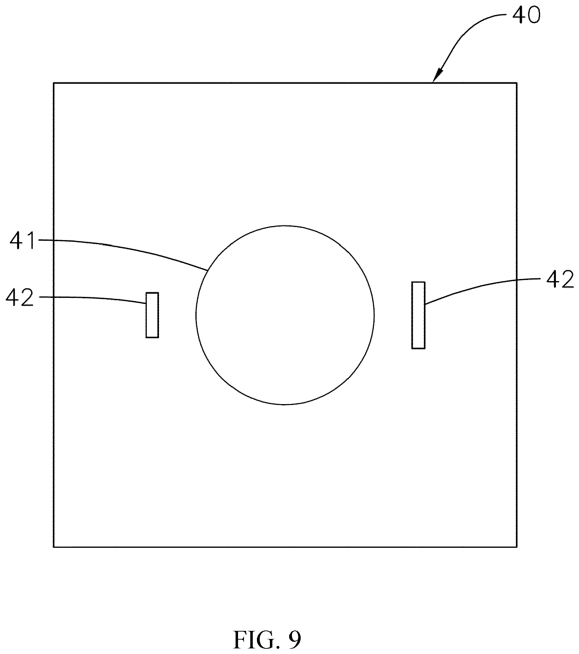

Referring to FIG. 1 again, a mount 30 is disposed under the dispensing outlet 14. A cup-holding space 31 is provided above the mount 30, and the cup-holding space 31 may be used to place a coffee cup containing brewed coffee. The mount 30 may be a detachable drip tray or scale disposed under the dispensing outlet 14. The brewing machine 10 may brew a cup of coffee using a specially-made drip coffee pouch A. The drip coffee pouch A may contain coffee grounds and is able to precisely control the size and weight of the coffee grounds therein. As shown in FIG. 8, the drip coffee pouch A includes a carrier bag A1 and two flaps A2. The carrier bag A1 is roughly conical, and the two flaps A2 are disposed on the outer surface of the carrier bag A1 and can be folded. The flaps A2 are used to hang the drip coffee pouch A on the pouch tray 40 shown in FIG. 9. The flaps A2 can be printed with bar codes, quick response codes (QR codes), digital codes or name labels. These printed codes or labels can be scanned by a scanning device (not shown) to quickly recognize the ingredient and other information of the specially-made drip coffee pouch A.

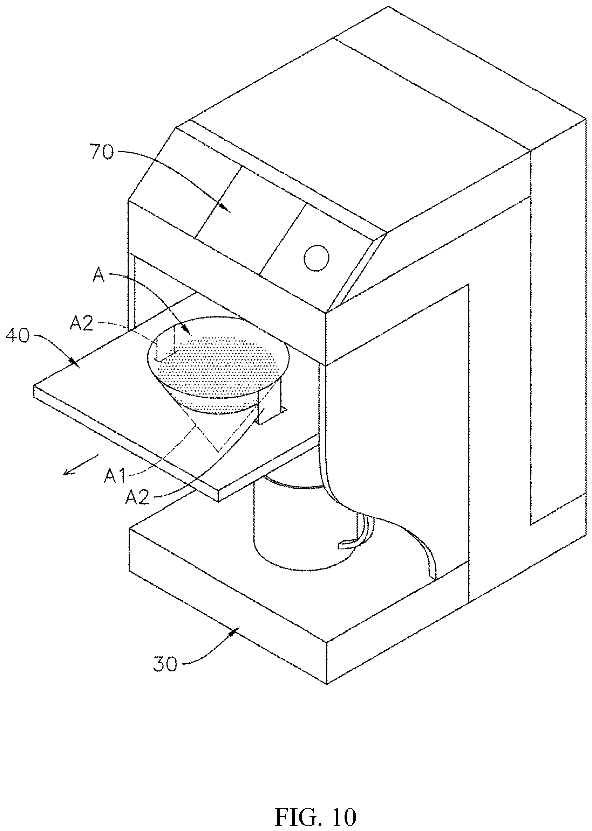

Please refer to FIG. 9 and FIG. 10, the pouch tray 40 is disposed under the dispensing outlet 14 and above the cup-holding space 31. In one embodiment, the pouch tray 40 has a bag hole 41 and a plurality of cutouts 42. The bag hole 41 directly faces the dispensing outlet 14 and the cup-holding space 31, and the cutouts 42 surround the bag hole 41. Two flaps may be respectively inserted in the cutouts 42 to hang the drip coffee pouch A on the pouch tray 40. Therefore, the carrier bag A1 of the drip coffee pouch A falls within the bag hole 41 of the pouch tray 40 and directly faces the dispensing outlet 14 and aligns with a coffee cup. In one illustrative example, the pouch tray 40 may move laterally by sliding rails and other mechanism to leave the position directly below the dispensing outlet 14 to the outside of the brewing machine (i.e. reaching an unblocked position), so that a user can easily put the drip coffee pouch A or a commercially-available coffee pouch on the pouch tray 40. It will be understood that any mechanism for generating appropriate movements to move the pouch tray 40 may be substituted. For example, the pouch tray 40 may pivot on a shaft to be ratably pop out and return to its original position. Furthermore, the pouch tray 40 can be operated automatically without manual operations.

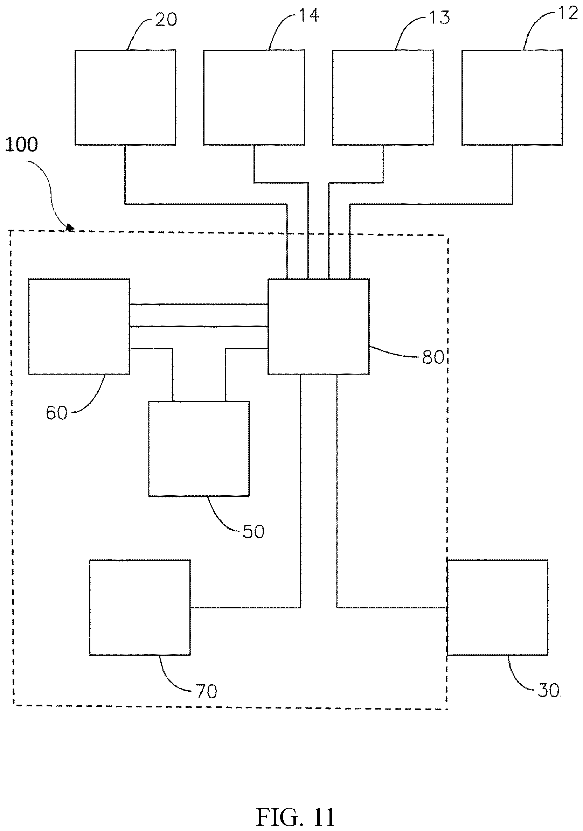

FIG. 11 is a schematic diagram of a computer system of a brewing machine according to an embodiment of the invention. As shown in FIG. 11, the computer system 100 may obtain information of a material to be brewed to provide at least one brewing parameter for a brewing process. The computer system 100 may include a scanning device 50, a data unit 60, an operation interface 70, and a control unit 80. The control unit 80 is electrically connected to the scanning device 50, the data unit 60, the operation interface 70, the motion device 20, the pump 13 and the heating device 12. The control unit 80 may, according to the brewing parameters provided by the data unit 60, control the heating device 12 to adjust the fluid temperature and control the voltage or speed of the pump 13 to adjust the dispensation rate/quantity of the dispensing outlet 14. The control unit 80 may also instruct the motion device 20 to move the dispensing outlet 14 according to a determined brewing pattern.

The scanning device 50 is used to scan bar codes, QR Codes, digital codes or name tags. The scanning device 50 may be disposed inside a brewing machine. In another illustrative example, the scanning device 50 may be a camera, and the camera may pick up images to identify the origin, vendor name, roast date, roast level and so on of coffee beans to determine brewing parameters.

The data unit 60 may provide a brewing parameter. The brewing parameter may include, for example, a brewing pattern, a fluid temperature, a grind size, a roast date, weight of a material to be brewed, a weight ratio of a material to be brewed to a brewing liquid, a dispensation quantity, a dispensation rate, a brewing mode, brewing time, bloom time, etc. The data unit 60 is expandable and allowed to increase or decrease brewing parameters that may affect the flavor, and the candidate brewing parameters can be adjusted according to the type of brewing liquid and the material to be brewed. The data unit 60 may provide brewing parameters by various ways exemplified in the following.

First, brewing parameters are directly recorded in the above-mentioned printed codes that can be scanned by the scanning device 50 and captured by the data unit 60. Second, the data unit 60 includes a memory that stores a database. The database records brewing parameters suitable for various types of coffee beans. After the scanning device 50 scans to identify the type of coffee beans, the data unit 60 recommends brewing parameters from the database suitable for the recognized type of coffee beans. Third, the data unit 60 has network connection capabilities, and, after the scanning device 50 scans and recognizes the type of coffee grounds, the data unit 60 selects suitable brewing parameters from a cloud database. Fourth, the data unit 60 includes a camera to retrieve, through image recognition, recommended brewing parameters from printed information on coffee bean packages. Fifth, the data unit 60 uses an algorithm to automatically calculate and then provide recommended brewing parameters according to the type of coffee beans (identified by the origin and/or name of coffee beans), roast date or roast level of coffee beans. For example, for some type of coffee beans, the longer it is further from the roast date, the stronger its flavor will be. Therefore, the dispensation quantity can be increased or the brewing time can be decreased for compensation. Moreover, medium roast beans often have a more caramelized taste than light roast beans, while light roast beans have a brighter and less oily flavor than medium roast beans. Under the circumstance, the data unit 60 may recommend a shorter brewing time for moderately roasted coffee beans, because shorter brewing time may make coffee flavor lighter. Similarly, a faster dispensation rate may make coffee flavor lighter, so the data unit 60 may recommend different dispensation rates for different types of coffee beans.

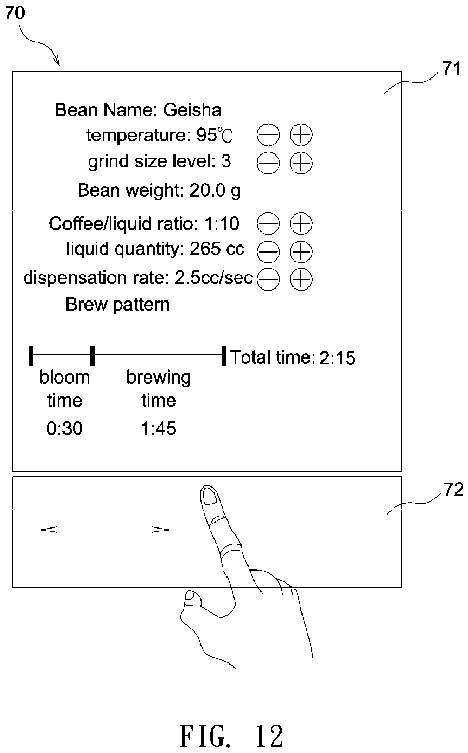

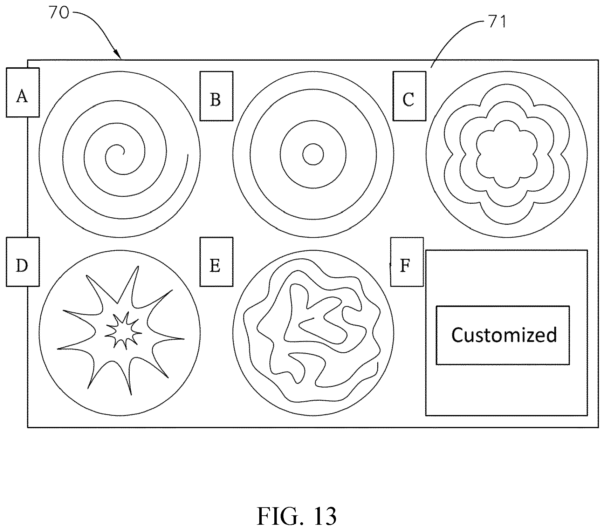

As shown in FIG. 12, the operation interface 70 can be used to set different brewing parameters. The operation interface 70 may include a touch screen 71 and a drawing tablet 72. The touch screen 71 may display the name of coffee beans recognized by the scanning device 50 and display recommended brewing parameters provided by the data unit 60. The touch screen 71 can display various icons or buttons for a user to click or activate, and a user can manually modify the brewing parameters by the touching screen 71. Further, a user can arbitrarily define or depict a brewing pattern using drawing tablet 72 for a subsequent brewing process. The operation interface 70 is not limited to specific structure as described in the above. For example, the touch screen 71 may be used to replace the drawing tablet 72, or the operation interface 70 may only have a display screen and physical buttons. As shown in FIG. 13, the touch screen 71 displays various brewing patterns for a user to choose. Each pattern button represents a specific type of brewing pattern, and a user can click on what they want to select a brewing pattern and then start brewing a beverage. The brewing pattern displayed on the touch screen 71 can be built-in brewing patterns provided by the data unit 60 or customized brewing patterns. A user may use a preset brewing pattern, activate a customized button to draw and define a brewing pattern, or directly draw a brewing pattern during a brewing process. A user may draw a new brewing pattern on the touch screen 71 or the drawing tablet 72 of the brewing machine, or draw a new brewing pattern through application programs executed on mobile devices (such as mobile phones, tablets, laptops or desktop computers). In addition, all the brewing patterns can be named and are not limited to brewing coffee. Further, customized brewing parameters and suggested brewing parameters can be saved to a database of the brewing machine, a mobile device, a non-mobile device, or a cloud database manually or automatically, and they can be chosen by a user or automatically recommended by the brewing machine for brewing. The operation interface 70 is not limited to be a touch screen of the brewing machine. The operation and setting of the operation interface 70 can be implemented on mobile devices (such as mobile phones, tablets, laptops or desktop computers) through application programs. Besides, operations of the scanning device 50, the data unit 60, and the operation interface 70 may be all executed by application programs on the mobile device and connected to the control unit 80 through a wired/wireless network device. For example, a mobile device is first connected to a brewing machine through an wired/wireless network device, and, after the scanning device 50 scans, the data unit 60 displays recommended brewing parameters in a mobile application program. A user may directly activate icons or press buttons in the mobile application program to select or adjust brewing parameters, and/or draw a brewing pattern directly by the application program and then send the brewing pattern to the control unit 80 to brew a beverage. Therefore, a mobile device can function as an operation interface 70. In addition, the camera of the mobile device can be used as a scanning device 50. After the barcode or QR code are recognized, subsequent brewing operations can be performed by the application program, or the recognized information can be sent to the data unit 60 and operation interface 70 of the brewing machine for brewing. The different functional units of the computer system 100 may be implemented in various ways without limitation. For example, the data unit 60 and the control unit 80 can be integrated on a microcontroller (MCU), and the operation interface 70 can be implemented by a tablet or a mobile application program to further simplify the overall structure of the computer system 100.

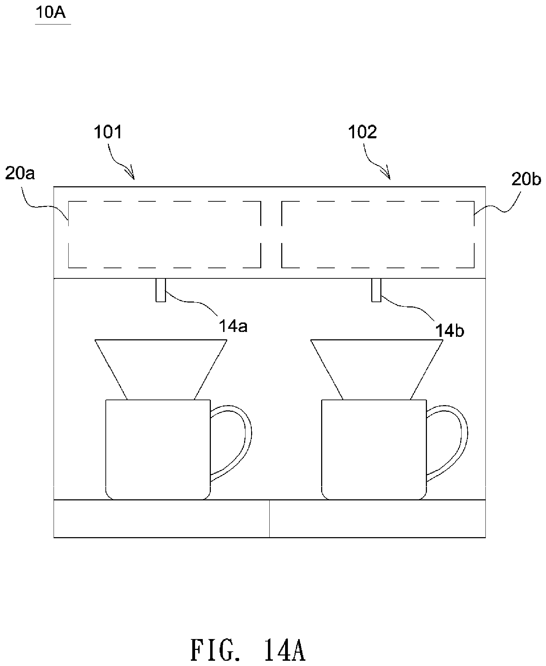

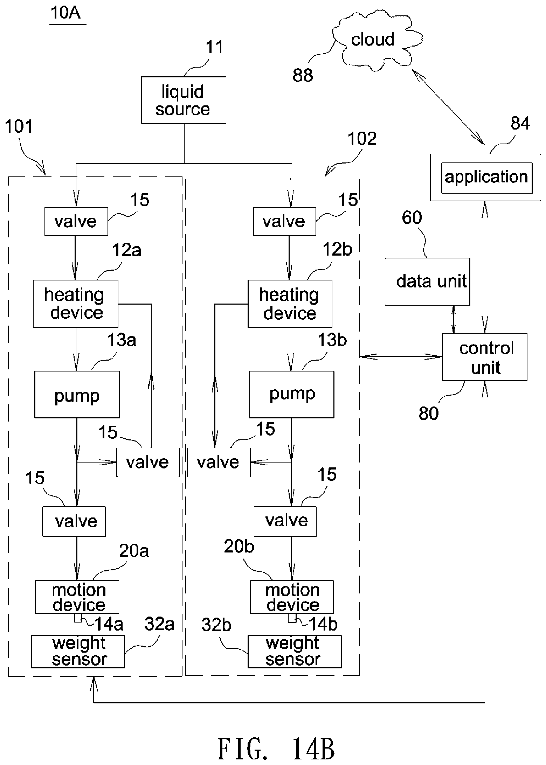

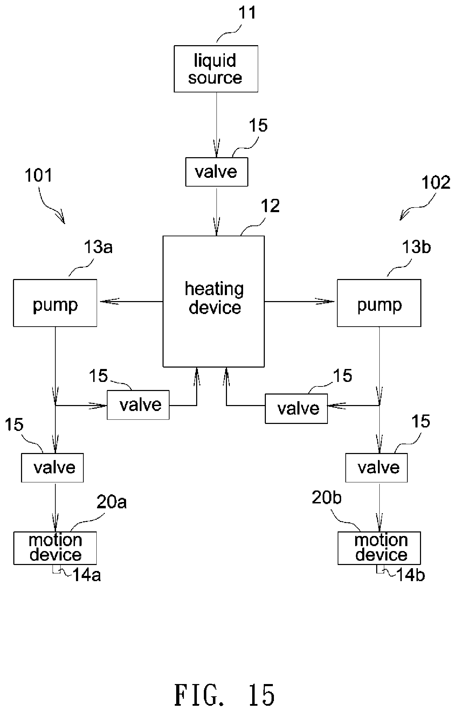

FIG. 14A shows a brewing machine according to another illustrative example, and FIG. 14B shows a functional block diagram of the brewing machine of FIG. 14A. In this illustrative example, the brewing machine 10A may include a plurality of brewing assemblies (exemplified in FIG. 14A as having two brewing assemblies 101 and 102), the assemblies 101 and 102 have their respective independently-controlled motion devices 20a and 20b and dispensing outlets 14a and 14b to thus form two brewing stations. As shown in FIG. 14B, the liquid source 11 supplies liquid to a heating device 12a of the brewing assembly 101 and heating device 12b of the brewing assembly 102 by controlling solenoid valves 15. The heating device 12a heats the liquid to a desired temperature, and a pump 13a pumps the liquid to the dispensing outlet 14a disposed on the motion device 20a. The heating device 12b heats the liquid to a desired temperature, and a pump 13b pumps the liquid to the dispensing outlet 14b disposed on the motion device 20b. The control unit 80 may perform feedback control on the pumping speed or rotational speed of the pump 13, so that the dispensation rate of the liquid out 14 may vary at different brewing stages to achieve a desired flavor. For example, as shown in FIG. 2, a flow measurement device 141 such as a flow meter continuously measures the dispensation rate of the dispensing outlet 14 during the brewing process and provides feedback to the control unit 80, so that the control unit 80 may regulate the pumping speed or rotational speed of the pump 13 according to feedback from the flow meter to vary the dispensation rate/quantity at different brewing stages. Weight sensors 32a and 32b can be used to detect the weight of the fluid injected into the container. The brewing assemblies 101 and 102 then transmit weight signals to the control unit 80, and the control unit 80 takes the derivative of weight values with respect to time to obtain the current dispensation rate. An independent feedback sensor (such as PI controller or PID controller) can be used to perform feedback control to obtain the desired dispensation rate at different brewing stages. Further, the brewing assemblies 101 and 102 may also transmit feedback signals of temperature and liquid level from the heating device 12a and 12b to obtain accurate temperature and liquid level controls. It should be noted that various types of feedback control information described above can be displayed on the operation interface or other interface to allow a user to see. In addition, the feedback sensor may be implemented by electronic circuits or software without limitation. On the other hand, the control unit 80 may output various control signals to brewing assemblies 101 and 102, such as control signals of the solenoid valve voltage, heating device voltage, motor voltage and so on. In other illustrative examples, the liquid can be pushed to the dispensing outlet 14 directly via gravity without the pump 13. For example, the liquid source 11 can be placed above the brewing machine 10A. Alternatively, the liquid source 11 may use a pressurized container to store liquid. The liquid may be preheated by a heater (not shown) outside the brewing machine 10A, so that the heating device 12a and 12b may heat the liquid to a desired temperature more quickly. In one example, the liquid source 11 may be a liquid storage tank that can be received inside and taken out from the brewing machine 10A. The brewing machine 10A can be used with a liquid purification device or a liquid disinfection device, and minerals or other additives can be added to liquid to form different liquid flavors. Further, each brewing assembly is allowed to independently dispense liquid and not limited to a specific structure. For example, the pumps 13a and 13b may be disposed before the liquid source 11 and the heating device 12a and 12b to reduce the temperature of liquid entering the pumps 13a and 13b. Alternatively, as shown in FIG. 15, two brewing assemblies 101 and 102 may share the same heating device 12 to reduce the number of components and fabrication costs.

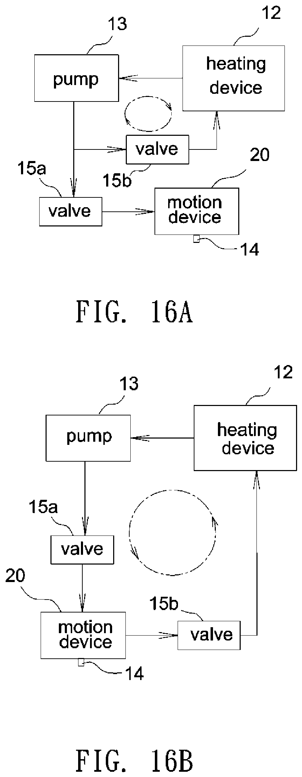

FIG. 16A shows a schematic diagram illustrating the design of a return path. As shown in FIG. 16A, the pump 13 is disposed in a fluid path between the heating device 12 and the dispensing outlet 14, and two solenoid valves 15a and 15b are set in the fluid path between the heating device 12 and the dispensing outlet 14 to form a return path that may allow the liquid flowing to the dispensing outlet 14 to return to the heating device 12. In detail, when a brewing machine receives a brewing instruction, the solenoid valve 15a is closed and the solenoid valve 15b is opened to allow the liquid to flow back through the pump 13 and the solenoid valve 15b and finally return to the heating device 12. Thereby, the pipeline and liquid with a lower temperature in the pipeline can be pre-heated before the dispensing outlet 14 begins to dispense liquid. The liquid can be continually returned until the pipeline and the heating device consistently reach a desired temperature. When the reflow process ends, the solenoid valve 15a is opened and the solenoid valve 15b is closed to allow the dispensing outlet 14 to dispense liquid to a container to start brewing. The design of a return path may ensure that initial liquid dispensed from the dispensing outlet 14 at the beginning of each brewing has a temperature consistent with the set temperature to obtain more precise temperature controls.

The design of the return path may vary without limitation. For example, as shown in FIG. 16B, in other embodiment, the solenoid valve 15b can be arranged at a position closer to the dispensing outlet 14 in the fluid path, so that more pipelines in the fluid path from the pump 13 to the solenoid valve 15b and the dispensing outlet 14 can be preheated. This may further ensure precise temperature controls. Further, in one example, when the liquid injected into a container reaches a predetermined amount to finish the brewing process, the pump 13 may act suddenly to discharge the residual liquid in the pipeline, therefore preventing cooled liquid residual from entering the container during the next brewing process and from dripping through the dispensing outlet 14 when no brewing action is in progress. It should be noted that the solenoid valve described herein is merely for exemplified purposes, and other type of valve with the same function can also be used without limitation.

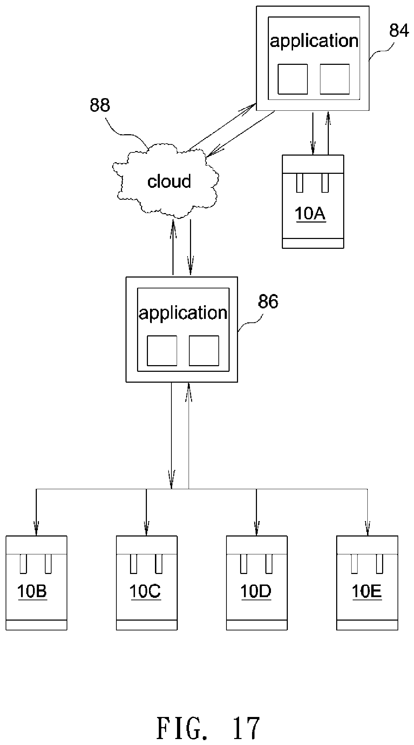

Please refer to FIG. 14B again, the control unit 80 of the brewing machine 10A can be connected to a device 84 capable of execute an application program through wireless signals (such as Bluetooth or Wi-Fi) or wired signals (such as a USB, Ethernet, or serial port). The device 84 can be, for example, a mobile device such as a cell phone, and the device 84 may send commands to the brewing machine 10A by an application program to, for example, start brewing a beverage. The brewing machine 10A may provide status information (such as beginning or finishing brewing a beverage, insufficient water level, failure warning, etc.) or other information to the application program of the device 84. The control unit 80 may directly retrieve brewing parameter information from the data unit 60 of the brewing machine 10A or download the brewing parameter information from the cloud database 88 through the application program, and then send the brewing parameter information to the brewing machine 10A. Status information of the brewing machine 10A and/or brewing parameter information can be stored in the brewing machine 10A itself, the device 84, the application program of the device 84, the cloud database 88, etc. FIG. 17 shows a schematic diagram of a brewing system composed of multiple brewing machines. The brewing machines 10A-10E can use built-in brewing parameters to brew a beverage. The brewing parameter information sent by devices 84 and 86 can be used for brewing. For example, a user can input the brewing parameter information through the application program of the device 84 and send the brewing parameter information to the brewing machine 10A, and the device 86 can, through the application program, download brewing parameter information from the cloud database 88 to the device 86, the application program, or the brewing machines 10B-10E for brewing a beverage. The brewing machines 10A-10E may share their respective status information and/or brewing parameter information with each other. For example, the brewing machines 10A-10E may upload their respective status information and/or brewing parameter information to the cloud database 88 through a wired/wireless network device for the purpose of sharing information. The status information and/or brewing parameter information may be stored in the brewing machines 10A-10E, the devices 84 and 86, the application programs of the device 84 and 86, the cloud database 88, etc.

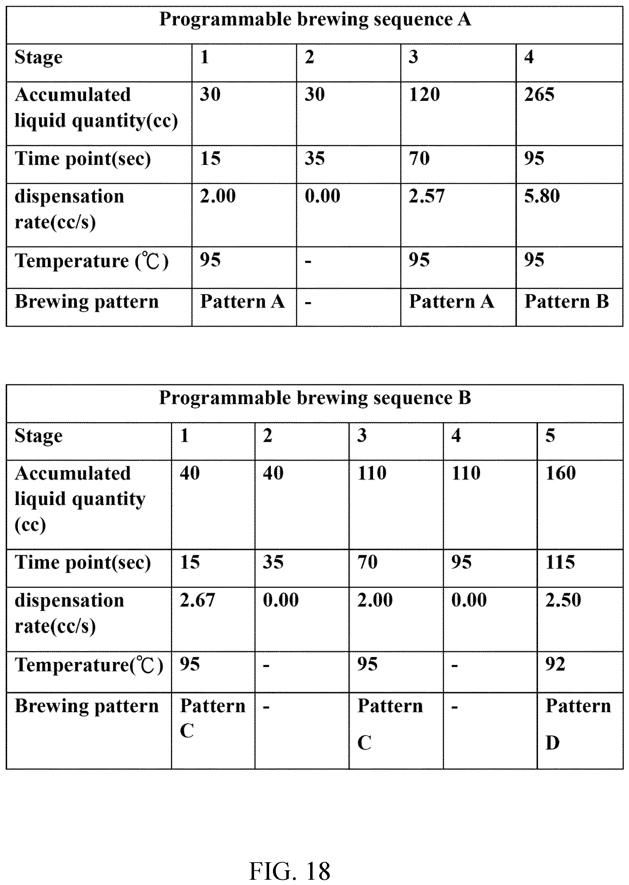

A brewing machine may brew a beverage according to the brewing parameter information obtained by various ways as described above. The brewing parameter information may include a programmable brewing sequence. As shown in FIG. 18, a programmable brewing sequence divides a total brewing time into multiple stages. Each of the stages corresponds to at least two different brewing parameters, and two successive stages have at least one different brewing parameter for brewing. The brewing parameter may be, for example, a brewing pattern, fluid temperature, a dispensation quantity, a dispensation rate, and so on. For example, in the programmable brewing sequence A, the duration of the first stage is 15 seconds with a dispensation rate of 2cc/sec, the duration of the second stage is 20 seconds (ends at the 35th second time point) with a dispensation rate changing to Occ/sec (i.e., the second stage is the so-called blooming stage). The third stage applies a dispensation rate of 2.57 cc/s and ends at the 70th second time point, and the fourth stage applies a dispensation rate of 5.8 cc/s and ends at the 95th second time point. The flavor/taste of a brewed beverage can be more accurately controlled by programming a brewing sequence. Furthermore, multiple brewing machines (such as shown in FIG. 17) may use different brewing sequences to brew beverages. For example, brewing machines 10B and 10C may use brewing sequence A to brew black coffee, and meanwhile brewing machines 10D and 10E may use brewing sequence B to brew latte coffee. Further, multiple brewing stations composed of multiple brewing assemblies in one brewing machine can execute different brewing sequences at the same time. For example, the brewing assembly 101 of the brewing machine 10A may execute the brewing sequence A, and meanwhile the brewing assembly 102 may execute the brewing sequence B. The programmable brewing sequences executed by a brewing machine are not limited to specific number and content. The programmable brewing sequence may be automatically recommended by the brewing machine, and a user may, using an operation interface of a brewing machine or an application program of the mobile device, to define or modify the programmable brewing sequence. Moreover, the brewing machine of each embodiment of the invention may use the programmable brewing sequence to brew a beverage.

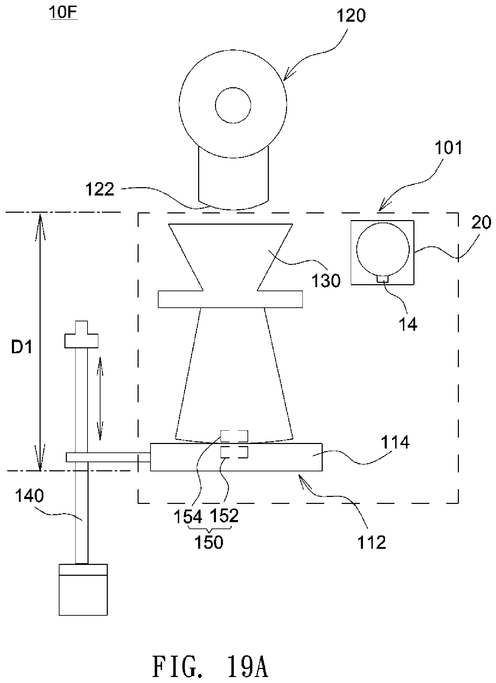

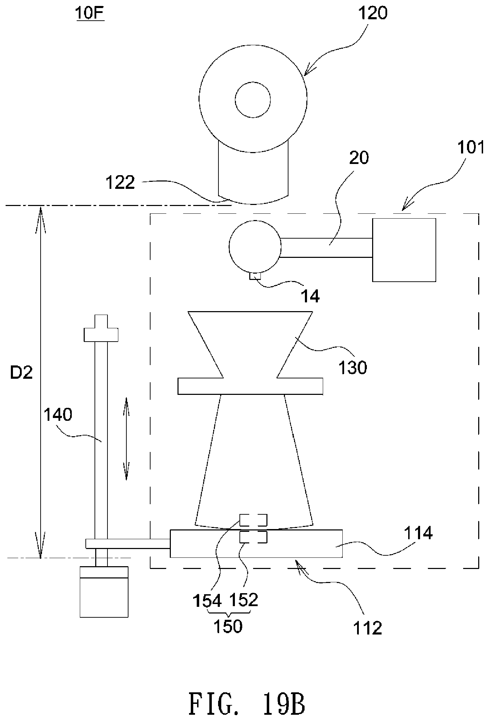

FIG. 19A and FIG. 19B are schematic diagrams illustrating a brewing machine according to another illustrative example. Referring to FIGS. 19A and 19B, a brewing machine 10F includes a brewing assembly 101 and a grinder 120. The brewing assembly 101 dispenses a liquid with a predetermined temperature to a container 130 to brew a beverage. The structure of brewing assembly has been described in the earlier section, thus not repeatedly explained in detail here. The grinder 120 is disposed above the brewing assembly 101, the grinder 120 can grind a raw material (such as coffee beans), and the ground material (such as coffee grounds) is then released thorough an outlet 122 of the grinder 120 along a path. In this embodiment, a transmission mechanism 140 can be used to adjust a distance between the outlet 122 of the grinder 120 and a bottom 112 of the brewing assembly 101. As shown in FIG. 19A, when the grinder 120 intends to release the ground material, the motion device 20 of the brewing assembly 101 moves the dispensing outlet 14 and other mechanical piece (such as the connection piece 202 and the second drive shaft 203 shown in FIG. 5) out of the released path of the ground material, and the transmission mechanism 140 moves the entire brewing assembly 101 upward to allow the outlet 122 of the grinder 120 to approach the container 130, thus preventing the ground material from being scattered outside the container 130. As shown in FIG. 19B, when the ground material is all released to the container 130, the transmission mechanism 140 downwardly moves the entire brewing assembly 101 to return to its original position, and then the motion device 20 moves the dispensing outlet 14 and other mechanical piece (such as the connection piece 202 and the second drive shaft 203 shown in FIG. 5) to the released path of the grinder 120 (that is, directly above the container 130) to allow the dispensing outlet 14 to dispense liquid to brew a beverage. Therefore, in this embodiment, when the grinder 120 releases the ground material (FIG. 19A), the grinder outlet 122 and the bottom 112 of the brewing assembly 101 are spaced a first distance D1 from each other. In comparison, when the dispensing outlet 14 dispenses liquid (FIG. 19B), the grinder outlet 122 and the bottom 112 of the brewing assembly 101 are spaced a second distance D2 from each other, and the first distance D1 is smaller than the second distance D2. In one embodiment, a scale 114 capable of sending out weight signals is disposed at the bottom 112 of the brewing assembly 101, and the transmission mechanism 140 may move the scale 114 to change the distance between the outlet 122 of the grinder 120 and the bottom 112 of the brewing assembly 101. Furthermore, as shown in FIG. 19B, the brewing machine 10F may be provided with an alignment device 150 to allow a user to easily align the center of the container 130 with the dispensing outlet 14. For example, a magnet 152 may be disposed inside the scale 114 at a position directly below the dispensing outlet 14 (at a dispensing position), and another magnet 154 may be provided at the center of the bottom of the container 130. The mutual attraction of magnets 152 and 154 allows for a quick alignment of the dispensing outlet 14 and the center of the container 130 when a user put the container 130 on the scale 114 (or a supporting mount). In addition, the alignment device 150 is not limited to a specific structure. For example, a protrusion may be formed on the scale 114 (or a supporting mount) at the position directly below a dispensing outlet 14, and a notch may be formed at the center of the bottom of the container 130 to engage the protrusion to achieve the alignment.

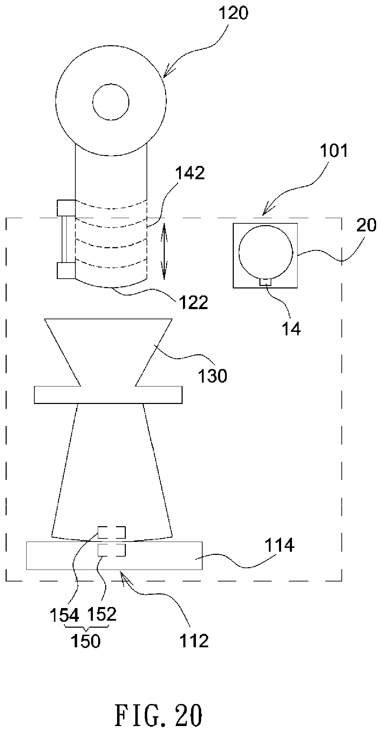

The transmission mechanism is not limited to a specific structure, as long as it is able to change the distance between the outlet 122 of the grinder 120 and the bottom 112 of the brewing assembly 101 (or the distance between the outlet 122 and the top of the container 130). For example, as shown in FIG. 20, the transmission mechanism may be a telescopic hollow tube 142 that can be automatically or manually extended and retracted to vary the distance between the outlet 122 and the brewing assembly 101. Further, the grinder 120 can be controlled by a user using, for example, mobile application programs, and the grinder 120 may have a function of automatically adjusting the grind size.

The motion device 20 may move the dispensing outlet 14 according to at least one brewing pattern to simulate the dispensation mode and pouring path in a brewing process. Further, the data unit 60 may provide a variety of brewing parameters including brewing patterns, a user may select, define or modify any brewing parameter through the operation interface 70 or other interface, and the control unit 80 may control the heating device 12 according to the selected or set brewing parameters to adjust the fluid temperature, dispensation quantity and rate and control the movement of the dispensing outlet 14. Therefore, various brewing parameters can be accurately controlled to eliminate the error and instability of hand-made beverage brewing. Furthermore, the brewing machine may integrate grinders and various transmission mechanisms actuated with respect to different dimensions, thus realizing more convenient use for a user.

## Claims

1. A brewing machine (10, 10A-10F), comprising:
a liquid source (11) for supplying a liquid;
a dispensing outlet (14) in fluid communication with the liquid source to dispense the liquid; and
a motion device (20) for moving the dispensing outlet (14) according to at least one brewing pattern,
**characterized in that** the motion device (20) comprises a first drive shaft (201) and a second drive shaft (203), the first drive shaft (201) rotates the second drive shaft (203), the second drive shaft (203) rotates the dispensing outlet (14), an extending line of the second drive shaft (203) is apart from and extends in a different direction than an extending line of the first drive shaft (201).

2. The brewing machine as claimed in claim 1, further comprising:
a grinder (120) disposed on a top of the brewing machine (10F) and having an outlet (122) for releasing a ground material; and
a transmission mechanism (140) for adjusting a distance between the outlet (122) of the grinder (120) and a bottom (112) of the brewing machine (10F).

3. The brewing machine as claimed in claim 1, further comprising:
a heating device (12) in fluid communication with the liquid source (11) and capable of heating the liquid;
wherein the dispensing outlet (14) is in fluid communication with the heating device (12), and a return path (15a, 15b) is provided in a fluid path between the heating device (12) and the dispensing outlet (14) to allow the liquid flowing to the dispensing outlet (14) to return to the heating device (12).

4. The brewing machine as claimed in claim 3, further comprising:
a pump (13) disposed in a fluid path between the heating device (12) and the dispensing outlet (14) or between the liquid source (11) and the heating device (12); and
a flow measurement device (141) for measuring a quantity or rate of the liquid passing through the dispensing outlet (14) and providing a feedback to regulate a pumping speed or a rotational speed of the pump (13).

5. The brewing machine as claimed in claims 1 to 4, further comprising:
a pouch tray (40) disposed under the dispensing outlet (14) and having a bag hole (41) and a plurality of cutouts (42) surrounding the bag hole (41), and the bag hole (41) directly facing the dispensing outlet (14).

6. The brewing machine as claimed in claims 1 to 4, further comprising:
a computer system (100) capable of retrieving information of a material to be brewed to provide at least one brewing parameter, wherein the brewing parameter includes at least one of a brewing pattern, a fluid temperature, a grind size, a roast date, weight of the material to be brewed, a weight ratio of the material to be brewed to a brewing liquid, a dispensation quantity, a dispensation rate, a brewing mode, brewing time and bloom time, and wherein the brewing machine comprises a first dispensing outlet (14a) and a second dispensing outlet (14b), and the computer system (100) is capable of operating the first dispensing outlet (14a) according to a first programmable brewing sequence and operating the second dispensing outlet (14b) according to a second programmable brewing sequence different to the first programmable brewing sequence.

7. The brewing machine as claimed in claims 1 to 4, wherein the motion device (20) is capable of moving the dispensing outlet (14) according to a user-defined brewing pattern.

8. The brewing machine as claimed in claims 1 to 4, further comprising a scale (114) disposed on the bottom of the brewing machine.

## Patentansprüche

1. Brühmaschine (10, 10A-10F), welche umfasst:
eine Flüssigkeitsquelle (11) zum Zuführen einer Flüssigkeit;
einen Entnahmeauslass (14), der in Fluidverbindung mit der Flüssigkeitsquelle steht, um die Flüssigkeit abzugeben; und
eine Bewegungsvorrichtung (20) zum Bewegen des Entnahmeauslasses (14) gemäß mindestens einem Brühmuster,
**dadurch gekennzeichnet, dass** die Bewegungsvorrichtung (20) eine erste Antriebsachse (201) und eine zweite Antriebsachse (203) umfasst, wobei die erste Antriebsachse (201) die zweite Antriebsachse (203) dreht, die zweite Antriebsachse (203) den Entnahmeauslass (14) dreht, eine Erstreckungslinie der zweiten Antriebsachse (203) von einer Erstreckungslinie der ersten Antriebsachse (201) getrennt ist und sich in eine andere Richtung als diese erstreckt.

2. Brühmaschine nach Anspruch 1, welche ferner umfasst:
eine Mühle (120), die an einer Oberseite der Brühmaschine (10F) angeordnet ist und einen Auslass (122) zur Ausgabe eines gemahlenen Materials aufweist; und
einen Übertragungsmechanismus (140) zum Einstellen eines Abstands zwischen dem Auslass (122) der Mühle (120) und einer Unterseite (112) der Brühmaschine (10F).

3. Brühmaschine nach Anspruch 1, welche ferner umfasst:
eine Heizvorrichtung (12), die in Fluidverbindung mit der Flüssigkeitsquelle (11) steht und in der Lage ist, die Flüssigkeit zu erhitzen;
wobei der Entnahmeauslass (14) mit der Heizvorrichtung (12) in Fluidverbindung steht, und wobei ein Rücklaufpfad (15a, 15b) in einem Flüssigkeitspfad zwischen der Heizvorrichtung (12) und dem Entnahmeauslass (14) vorgesehen ist, sodass die zum Entnahmeauslass (14) fließende Flüssigkeit zur Heizvorrichtung (12) zurückfließen kann.

4. Brühmaschine nach Anspruch 3, welche ferner umfasst:
eine Pumpe (13), die in einem Flüssigkeitspfad zwischen der Heizvorrichtung (12) und dem Entnahmeauslass (14) oder zwischen der Flüssigkeitsquelle (11) und der Heizvorrichtung (12) angeordnet ist; und
ein Durchflussmessgerät (141) zum Messen einer Menge oder Rate der durch den Entnahmeauslass (14) hindurchgehenden Flüssigkeit und zum Bereitstellen einer Rückmeldung zur Regulierung einer Pumpgeschwindigkeit oder einer Drehgeschwindigkeit der Pumpe (13).

5. Brühmaschine nach Ansprüchen 1 bis 4, welche ferner umfasst:
eine Beutelablage (40), die unter dem Entnahmeauslass (14) angeordnet ist und eine Beutelöffnung (41) sowie mehrere die Beutelöffnung (41) umgebende Aussparungen (42) aufweist, wobei die Beutelöffnung (41) dem Entnahmeauslass (14) direkt zugewandt ist.

6. Brühmaschine nach Ansprüchen 1 bis 4, welche ferner umfasst:
ein Computersystem (100), das Informationen über ein aufzubrühendes Material abrufen kann, um mindestens einen Brühparameter bereitzustellen, wobei der Brühparameter zumindest eines von einem Brühmuster, einer Flüssigkeitstemperatur, einem Mahlgrad, einem Röstdatum, einem Gewicht des aufzubrühenden Materials, einem Gewichtsverhältnis des aufzubrühenden Materials zu einer Brühflüssigkeit, einer Abgabemenge, einer Abgaberate, einem Brühmodus, Brühzeit und Blütezeit beinhaltet, und wobei die Brühmaschine einen ersten Entnahmeauslass (14a) und einen zweiten Entnahmeauslass (14b) umfasst, und das Computersystem (100) in der Lage ist, den ersten Entnahmeauslass (14a) gemäß einer ersten programmierbaren Brühfolge zu betreiben und den zweiten Entnahmeauslass (14b) gemäß einer zweiten programmierbaren Brühfolge zu betreiben, die sich von der ersten programmierbaren Brühfolge unterscheidet.

7. Brühmaschine nach Ansprüchen 1 bis 4, bei welcher die Bewegungsvorrichtung (20) in der Lage ist, den Entnahmeauslass (14) gemäß einem benutzerdefinierten Brühmuster zu bewegen.

8. Brühmaschine nach Ansprüchen 1 bis 4, welche ferner eine an dem Boden der Brühmaschine angeordnete Skala (114) umfasst.

## Revendications

1. Machine d'infusion (10, 10A-10F), comprenant :
une source de liquide (11) destinée à fournir un liquide ;
une sortie de distribution (14) en communication fluidique avec la source de liquide pour distribuer le liquide ; et
un dispositif de déplacement (20) pour déplacer la sortie de distribution (14) selon au moins un modèle d'infusion,
**caractérisé en ce que** le dispositif de déplacement (20) comprend un premier arbre d'entraînement (201) et un second arbre d'entraînement (203), le premier arbre d'entraînement (201) fait tourner le second arbre d'entraînement (203), le second arbre d'entraînement (203) fait tourner la sortie de distribution (14), une ligne d'extension du second arbre d'entraînement (203) est séparée d'une ligne d'extension du premier arbre d'entraînement (201) et s'étend dans une direction différente de celle-ci.

2. Machine d'infusion selon la revendication 1, comprenant en outre :
un broyeur (120) disposé au-dessus de la machine d'infusion (10F) et présenant une sortie (122) pour libérer un matériau broyé ; et
un mécanisme de transmission (140) pour ajuster une distance entre la sortie (122) du broyeur (120) et un fond (112) de la machine d'infusion (10F).

3. Machine d'infusion selon la revendication 1, comprenant en outre :
un dispositif chauffant (12) en communication fluidique avec la source de liquide (11) et apte à chauffer le liquide ;
dans laquelle la sortie de distribution (14) est en communication fluidique avec le dispositif chauffant (12), et une trajectoire de retour (15a, 15b) est prévue dans une trajectoire de fluide entre le dispositif chauffant (12) et la sortie de distribution (14) pour permettre au liquide s'écoulant vers la sortie de distribution (14) de retourner vers le dispositif chauffant (12).

4. Machine d'infusion selon la revendication 3, comprenant en outre :
une pompe (13) disposée dans une trajectoire de fluide entre le dispositif chauffant (12) et la sortie de distribution (14) ou entre la source de liquide (11) et le dispositif chauffant (12) ; et
un dispositif de mesure d'écoulement (141) destiné à mesurer une quantité ou un débit du liquide passant à travers la sortie de distribution (14) et à fournir un retour pour réguler une vitesse de pompage ou une vitesse de rotation de la pompe (13).

5. Machine d'infusion selon les revendications 1 à 4, comprenant en outre :
un plateau pour sachet (40) disposé sous la sortie de distribution (14) et présentant un trou de sachet (41) et une pluralité de découpes (42) entourant le trou de sachet (41), et le trou de sachet (41) faisant directement face à la sortie de distribution (14).

6. Machine d'infusion selon les revendications 1 à 4, comprenant en outre :
un système informatique (100) apte à extraire des informations d'une substance à infuser pour fournir au moins un paramètre d'infusion, dans laquelle le paramètre d'infusion inclut au moins l'un parmi un modèle d'infusion, une température de fluide, une taille de mouture, une date de torréfaction, un poids de la matière à infuser, un rapport en poids entre la matière à infuser et un liquide d'infusion, une quantité de distribution, un débit de distribution, un mode d'infusion, un temps d'infusion et un temps de pré-infusion, et dans laquelle la machine d'infusion comprend une première sortie de distribution (14a) et une seconde sortie de distribution (14b), et le système informatique (100) est apte à faire fonctionner la première sortie de distribution (14a) selon une première séquence d'infusion programmable et à faire fonctionner la seconde sortie de distribution (14b) selon une seconde séquence d'infusion programmable différente de la première séquence d'infusion programmable.

7. Machine d'infusion selon les revendications 1 à 4, dans laquelle le dispositif de déplacement (20) est apte à déplacer la sortie de distribution (14) selon un modèle d'infusion défini par l'utilisateur.

8. Machine d'infusion selon les revendications 1 à 4, comprenant en outre une balance (114) disposée sur le fond de la machine d'infusion.
